# EUROPEAN PATENT SPECIFICATION

(11) **EP 1 076 982 B1**
(45) Date of publication and mention of the grant of the patent: **27.08.2003**
(21) Application number: 99919706.4
(22) Date of filing: 29.04.1999
(51) Int. Cl.: H04M 3/00, H04L 29/12, H04M 3/42

(54) **SYSTEM FOR COUPLING THE PUBLIC TELEPHONE NETWORK TO THE INTERNET**
SYSTEM ZUM ANKOPPELN DES ÖFFENTLICHEN FERNSPRACHNETZ AN INTERNET
SYSTEME DE COUPLAGE DU RESEAU TELEPHONIQUE PUBLIC A L'INTERNET

(30) Priority: 06.05.1998 NL 1009083
(43) Date of publication of application: 21.02.2001
(73) Proprietor: Koninklijke KPN N.V., 2595 AL The Hague (NL)
(72) Inventor: VAN TOL, Alphonsus, Johannes, NL-2402 ZA Alphen a/d Rijn (NL)
(74) Representative: Wuyts, Koenraad Maria
(86) International application number: PCT/NL99/00260
(87) International publication number: WO 99/057873

(56) References cited:
- WO-A-98/04088
- US-A- 5 621 734
- ORLAMUENDER H ET AL: "HANDLING INTERNET TRAFFIC IN TELECOMMUNICATIONS NETWORKS" ISS '97. WORLD TELECOMMUNICATIONS CONGRESS. (INTERNATIONAL SWITCHIN SYMPOSIUM), GLOBAL NETWORK EVOLUTION: CONVERGENCE OR COLLISION? TORONTO, SEPT. 21 - 26, 1997, vol. 1, 21 September 1997 (1997-09-21), pages 579-586, XP000720566 ABE S ET AL
- SCHOEN U ET AL: "CONVERGENCE BETWEEN PUBLIC SWITCHING AND THE INTERNET" IEEE COMMUNICATIONS MAGAZINE, vol. 36, no. 1, January 1988 (1988-01), pages 50-58, 63 - 65, XP000739153
- MALKIN GARY SCOTT: "DIAL-IN VIRTUAL PRIVATE NETWORKS USING LAYER 3 TUNNELING" PROCEEDINGS OF THE 1997 22ND CONFERENCE ON LOCAL COMPUTER NETWORKS, LCN. MINNEAPOLIS, MN, USA, 2 - 5 November 1997, pages 555-561, XP002084438

## Description

The invention relates to a system for coupling the public telephone network to the Internet using a number of points-of-Presence, or PoPs, arranged between the public telephone network, or public Switched Telephony Network PSTN, and an Internet Service Provider, ISP, a PoP including means for being dialled from the public telephone network.

Access to the Internet is permitted by Internet Service Providers. With the present system of coupling to the Internet, each ISP has a number of arranged PoPs.

Through the public telephone network, indicated as PSTN, an Internet user establishes a connection with a PoP of the desired ISP. Then, from the PoP the traffic is routed to the ISP concerned through a fixed connection.

When the routing is applied as described in the non-prepublished Dutch patent application NL-1008259, one PoP per traffic exchange area for each ISP will suffice. Furthermore, then directly at the source it will already be known that Internet traffic is concerned.

Necessarily, the ISP must provide for a covering network of PoPs and further rent fast connections between them and its central server. This is a relatively expensive matter, particularly for smaller ISPs.

The international application WO-A-98/04088 discloses a database central routing device for routing incoming access requests for Internet access among a variety of on-line service providers. The device includes a central access server which at first is dialled from a telephone network by a user/client who seeks access to a suitable one of the on-line service providers. Then the access server sends an algorithm that is executable by the user/client's software, which pertains particular phone numbers in order to give the user/client access to a suitable one of the on-line service providers. Then the phone number of a selected service provider should be dialled for the actual access. In a system for access to the Internet, which would include additionally such a database central routing device, each ISP would still have to provide for its own covering network of PoPs. Moreover this known technique does not provide a solution for the above problem of the large number of fixed rented connections between the PoPs and the ISPs. Finally a user/client would need to dial from the telephone network at least two telephone numbers, one for dialling the central access server and one for dialling a selected service provider.

Patent document US-A-5,621,734 discloses a local area network in which pluralities of service providers, such as data processing systems, data storage devices or data links, are interconnected to provide distributed processing capabilities to pluralities of users, such as terminals or printers. Each plurality of service providers and each plurality of service users has been connected to the network respectively via a node and a service device, the connections between a node and its corresponding service providers and between a service device and its corresponding service users being apparently fixed ones. In this known network concept each node is, as it were, a point-of-presence for a plurality of service providers and a service device is, as it were, a point-of-presence for a plurality of users. Such a two-layer structure for points-of-presence with in between a local area network differs totally from a system for coupling the PSTN to ISPs of the Internet with in between a single layer of points-of-presence. Moreover such a local area network is, as a matter of fact, not applicable in an Internet access network for ISPs, which can be dialled from the PSTN, and which requires a large number of PoPs for covering a given large geographic region per ISP.

Paper Orlamuender H. et al.: "Handling internet traffic in Telecommunications networks", ISS '97 World Telecommunications Congress (International Switching Symposium), Global Network Evolution: Convergence or Collision? Toronto, Sept. 21-26, 1997, vol. 1, 21 Sept. 1997 (1997-09-21), pages 579-586, XP-000720566, discloses the handling of Internet traffic in telecommunications networks, and more particularly the possibility of integrating the PoP-function in the exchange, while changing the role of the ISP's, since the ISP then no longer has to provide the direct access to the Internet. This requires the introduction of handling "connectionless packet-switched data" in PSTN-exchanges and, consequently, the addition of modified or new modules to such exchanges. The present invention obviates the need for such changes.

An object of the invention is to reduce considerably the total number of PoPs.

According to an aspect of the invention, a system of the above kind, and for the definition of which the document WO-A-98/04088 has been used, is characterised in that the means for being dialled from the public telephone network have been arranged for being dialled by various telephone numbers, each of which determines an ISP, and in that a PoP includes switching means for switching through, via a packet-switched data network, received signals to more than one ISP, the choice of a particular ISP each time being determined by the dialled telephone number.

This means that a number of ISPs can use one single switching PoP, in which such a PoP itself will allot the traffic to the various ISPs. Thus, the number of PoPs can be considerably reduced. Such a switching PoP can be applied for all or a number of ISPs for providing the routing to it. There, the required conversion of circuit-switched into packet-switched can be under the responsibility of an Internet Access Operator to be established.

The switching PoP comprises means that can be chosen from the public telephone network by various access numbers, in which the selected number determines which ISP is contacted. If the network operator of the PSTN has chosen a routing as described in the previously stated Dutch patent application NL-1008259, then the chosen number will consist of a so-called prefix, indicating that it concerns an Internet call, and a serial number being unique per ISP.

The PoP assigns a free modem from the modem bank to the call and establishes the connection with the Internet server. Now the Internet server assigns an IP address to the caller based on the selected telephone number. With that, it is fixed which ISP the caller will be connected to.

The nature of the connection between PSTN and PoP also depends on the regulations in force. If the PoP is considered as a subscriber connection, then this should be an ISDN connection having DSS1-signalling. DSS1 is understood to mean Digital Subscriber Signalling. If, on the other hand, the PoPs are considered as another network, then the connection should take place in the way standard networks of other operators are connected, as e.g. according to Q.767 or Q.763.

The outgoing router of a PoP will be connected to a Frame Relay or other packet-switched data network by at least a 2 Mb link. Communication with the central servers of the several ISPs will then take place through said Frame Relay network. The switching PoP will provide for establishing a data connection with the desired ISP depending on the selected number.

A PoP manager can be added to the PoPs described. This is a PC directly adjacent the PoP or at a distance from it, controlling a number of PoPs and performing the following functions:
a) Configuration management: management of the tables for conversion of telephone numbers into IP addresses;
b) Error management: indicating and recording errors in the connections to the PSTN and to the ISPs;
c) Performance management: monitoring the load of the PoPs for timely enhancement of the capacity; and
d) Accounting management: recording the use of the PoP itemized per ISP in order to be able to charge the costs in proportion.

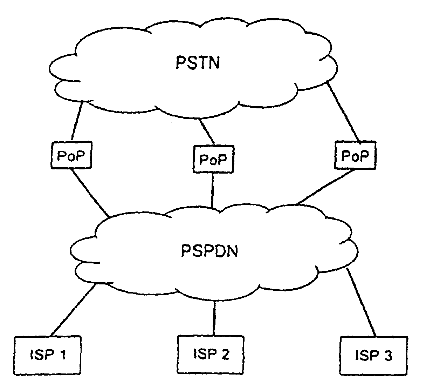

The invention is further explained by way of a diagram illustrated in the accompanying figure. Therein, PSTN - Public Switched Telephone Network - stands for the public telephone network, PoP stands for a number of Points-of-Presence, PSPDN stands for Public Switched Packet Data Network and ISP 1, 2, 3 indicate some Internet Service Providers.

As illustrated in the diagram, each PoP is arranged such that it can be lead a signal received from the PSTN to the various ISPs, so not, as is the case up to now, to only one single ISP.

Obviously, the invention also relates to a PoP capable of switching a received signal on to more than one ISP.

It will be obvious, that only one possible embodiment of a system according to the invention has been illustrated in the drawing and described above and that many changes can be made without leaving the inventive idea, as it is indicated in the accompanying claims.

## Claims

1. System for coupling the public telephone network to the Internet using a number of Points-of-Presence, PoPs (PoP), arranged between the public telephone network (PSTN), and an Internet Service Provider, ISP (ISP1;ISP2;ISP3), a PoP including means for being dialled from the public telephone network,
**characterised in that** the means for being dialled from the public telephone network have been arranged for being dialled by various telephone numbers, each of which determines an ISP, and **in that** a PoP further includes both switching means for switching through, via a packet-switched data network, received signals to more than one ISP and means for determining a particular ISP based upon the dialled telephone number.

2. System according to claim 1, **characterised in that** each of the various telephone numbers includes a prefix indicating an Internet call and a serial number being unique per ISP.

3. System according to claim 1 or 2, **characterised in that** the packet-switched data network is a public switched packet data network (PSPDN).

4. System according to claim 1, 2, or 3, **characterised in that** the system comprises a PoP manager for controlling a number of PoP's.

## Patentansprüche

1. System zum Verbinden des öffentlichen Telefonnetzwerks mit dem Internet unter Einsatz einer Anzahl von Einwahlpunkten, PoPs (PoP), die zwischen dem öffentlichen Telefonnetzwerk (PSTN) und einem Internet-Diensteanbieter, ISP (ISP1; ISP2; ISP3) angeordnet ist, wobei ein PoP Mittel umfasst, um von dem öffentlichen Telefonnetzwerk angewählt zu werden, **dadurch gekennzeichnet, dass** die Mittel, die von dem öffentlichen Telefonnetzwerk anzuwählen sind, so angeordnet sind, um von verschiedenen Telefonnummern angewählt zu werden, wobei jede einen ISP bestimmt, und dass ein PoP weiterhin sowohl ein Vermittlungsmittel zum Schalten von empfangenen Signalen zu mehr als einem ISP über ein paketvermitteltes Datennetzwerk als auch Mittel zum Bestimmen eines bestimmten ISPs basierend auf der gewählten Telefonnummer umfasst.

2. System nach Anspruch 1, **dadurch gekennzeichnet, dass** jede der verschiedenen Telefonnummern ein Präfix, das auf einen Internetanruf hinweist, und eine Seriennummer umfasst, die je ISP einzigartig ist.

3. System nach Anspruch 1 oder 2, **dadurch gekennzeichnet, dass** das paketvermittelte Datennetzwerk ein öffentliches vermitteltes Paket-Datennetzwerk (PSPDN) ist.

4. System nach Anspruch 1, 2 oder 3, **dadurch gekennzeichnet, dass** das System einen PoP-Verwalter umfasst, um eine Anzahl von PoPs zu steuern.

## Revendications

1. Système de couplage du réseau téléphonique public au réseau Internet moyennant l'utilisation d'un certain nombre de points de présence, PoPs (PoP), disposés entre le réseau téléphonique public (PSTN) et un prestataire de services Internet ISP (ISP1; ISP2; ISP3), un point de présence PoP comprenant des moyens pour être appelé par formation d'un numéro à partir du réseau téléphonique public,
**caractérisé en ce que** les moyens de formation du numéro d'appel à partir du réseau téléphonique public ont été conçus pour être activés au moyen de différents numéros de téléphone, dont chacun détermine un prestataire de services ISP, et **en ce qu'**un point de présence PoP inclut en outre à la fois des moyens de commutation pour transmettre, par l'intermédiaire d'un réseau de données à commutation de paquets, des signaux reçus vers plus d'un prestataire de services ISP et des moyens pour déterminer un prestataire de services ISP particulier sur la base du numéro de téléphone composé.

2. Système selon la revendication 1, **caractérisé en ce que** chacun des différents numéros de téléphone inclut un préfixe indiquant un appel Internet et un numéro de série unique pour chaque prestataire de service ISP.

3. Système selon la revendication 1 ou 2, **caractérisé en ce que** le réseau de données à commutation de paquets est un réseau public de transmission de données à commutation de paquets (PSPDN).

4. Système selon la revendication 1, 2 ou 3, **caractérisé en ce que** le système comprend une unité de gestion des points de présence PoP pour commander un certain nombre de points de présence PoP.
